# EUROPÄISCHE PATENTSCHRIFT

(11) **EP 1 606 331 B1**
(45) Veröffentlichungstag und Bekanntmachung des Hinweises auf die Patenterteilung: **16.09.2009**
(21) Anmeldenummer: 04723188.1
(22) Anmeldetag: 25.03.2004
(51) Int. Cl.: C08G 12/32, C08G 73/06

(54) **AMINOTRIAZIN-KONDENSATIONSPRODUKT, VERWENDUNG EINES AMINOTRIAZIN-KONDENSATIONSPRODUKTES UND VERFAHREN ZUR HERSTELLUNG DES AMINOTRIAZIN-KONDENSATIONSPRODUKTES**
AMINOTRIAZINE CONDENSATION PRODUCT, USE OF AN AMINOTRIAZINE CONDENSATION PRODUCT AND METHOD FOR THE PRODUCTION OF AN AMINOTRIAZINE CONDENSATION PRODUCT
PRODUIT DE CONDENSATION D'AMINOTRIAZINE, UTILISATION D'UN PRODUIT DE CONDENSATION D'AMINOTRIAZINE ET PROCEDE POUR PRODUIRE UN PRODUIT DE CONDENSATION D'AMINOTRIAZINE

(30) Priorität: 26.03.2003 DE 10314478; 09.05.2003 DE 10322107
(43) Veröffentlichungstag der Anmeldung: 21.12.2005
(73) Patentinhaber: AMI Agrolinz Melamine International GmbH, 4021 Linz (AT)
(72) Erfinder: FÜRST, Christian, A-4040 Linz (AT); SCHADENBÖCK, Michael, A-4470 Enns (AT); JOCHAM, Daniel, A-4020 Linz (AT)
(74) Vertreter: Gross, Felix
(86) Internationale Anmeldenummer: PCT/EP2004/003178
(87) Internationale Veröffentlichungsnummer: WO 2004/085506

(56) Entgegenhaltungen:
- EP-A- 0 568 865
- DE-A- 3 724 868
- US-A- 3 630 998
- US-A- 4 379 911
- US-A- 5 891 983

## Beschreibung

Die Erfindung betrifft ein Aminotriazin-Kondensationsprodukt gemäß Anspruch 1, deren Verwendung gemäß Anspruch 15 und ein Verfahren zu deren Herstellung gemäß Anspruch 16.

Als Vertreter der Aminotriazine besitzt das Melamin die größte technische Bedeutung. Melamin (I) ist ein sehr reaktionsträges Molekül und reagiert daher nur mit sehr reaktiven und daraus resultierend auch gefährlichen Substanzen (Halogene, Säurechloride, konzentrierte Salpetersäure, Cyanate, Thiocyanate, Alkylsulfate; BASF, Technisches Merkblatt "Melamin", 1969, 1-18). Die Kondensation von Melamin mit Aldehyden ist ebenfalls bekannt, wobei die Umsetzung von Melamin mit Formaldehyd die einzig wirtschaftlich bedeutende ist. Hieraus entstehen Melamin-Formaldehyd-Harze (Ullmann's Encyclopedia of Industrial Chemistry, (1987), Vol A2, 130-131).

Nachteilig dabei ist, dass insbesondere Formaldehyd als gesundheitsgefährdend einzustufen ist (giftig, potentiell krebserregend) und, dass Formaldehyd eine sehr reaktive Verbindung darstellt, so dass dessen Reaktionen nur schwer steuerbar sind. Weiters ist die Derivatisierbarkeit der primären Umsetzungsprodukte von Formaldehyd mit Melamin (Methylolmelamine) zum Großteil auf die Veretherung beschränkt.

Es sind auch Reaktionen von Glyoxylsäure und Glyoxal mit Melamin bekannt.

Die DE 42 17 181 A1 beispielsweise beschreibt die Verwendung der Kondensationsprodukte von Melamin und Glyoxylsäure und deren Salze als Additiv für hydraulische Bindemittel und Baustoffe.

Aus der DE 41 40 899 A1 ist ein Verfahren zur Herstellung wasserlöslicher Kondensationsprodukte aus einem Gemisch von Melamin, Glyoxylsäure und Glyoxal bekannt. Die erhaltenen Kondensationsprodukte finden als Gerbmittel Verwendung.

Bei der Umsetzung von Melamin mit Glyoxylsäure besteht der Nachteil, dass als Reaktionsprodukt ein sehr unreaktives Melamin-Glyoxylsäuresalz entsteht, welches einer nachfolgenden Derivatisierung nur mehr unter sehr großem Aufwand zugänglich ist.

Glyoxal polymerisiert sehr leicht zu Polyglyoxal und ist bei Raumtemperatur eine stark reizende Substanz. Die Derivatisierbarkeit der primären Umsetzungsprodukte mit Melamin ist, wie bei der Verwendung von Formaldehyd, auf die Veretherung beschränkt.

Die US 4,379,911 beschreibt Vernetzer für kationische Polymere auf der Basis von modifizierten Amino-Formaldehyd-Verbindungen. Bevorzugt eingesetzte Ausgangssubstanz ist Hexamethoxymethylmelamin, ein Kondensationsprodukt aus Melamin und Formaldehyd. Die Aktivierung des Melamin-Formaldehyd-Kondensationsproduktes erfolgt durch Einführung von reaktiven Carboxyestergruppen -X-CO₂R unter Ausbildung von -NH-CH₂-O-(X-CO₂R)ₙ Strukturen. Im Produkt ist somit eine labile Methylengruppe vorhanden, die leicht unter Bildung von Formaldehyd gespalten werden kann.

Die Aufgabe der vorliegenden Erfindung besteht darin, ein neuartiges, formaldehydfreies Aminotriazin-Kondensationsprodukt, insbesondere ein Melamin-Kondensationsprodukt bereitzustellen, dass durch eine Vielzahl von chemischen Transformationen einfach derivatisiert werden kann und somit eine große Zahl an Anwendungsmöglichkeiten bietet.

Diese Aufgabe wird durch ein formaldehydfreies Aminotriazin-Kondensationsprodukt mit dem Merkmalen des Anspruchs 1 gelöst, das durch eine Kondensation eines Aminotriazines mit mindestens einem Oxocarbonsäurederivat herstellbar ist.

Gegenstand der vorliegenden Erfindung ist demnach ein formaldehydfreies Aminotriazin-Kondensationsprodukt, insbesondere ein Melamin- Kondensationsprodukt, das herstellbar ist durch die Reaktion eines Aminotrianzines, insbesondere des Melamins, mit mindestens einem Oxocarbonsäurederivat, wobei sowohl mindestens eine Oxogruppe (-CO-) oder ein Derivat einer Oxogruppe aus der Gruppe umfassend ein Hemiketal, Hemiacetal, Imin, Hemiaminal, Hemiamidal, sowie deren Aminoderivate als auch mindestens ein Derivat einer Carboxylgruppe aus der Gruppe umfassend Ester, Amid, Amidin, Iminoester, Nitril, Anhydrid, sowie die Iminoderivate des Anhydrids im Molekül aufweist.

Geeignete Aminotrianzine sind beispielsweise Melamin, Ammelin, Ammelid oder auch substituierte Melamine, wie beispielsweise alkylierte oder hydroxyalkylierte Melamine. Besonders bevorzugt wird Melamin verwendet.

Beispiele für Oxocarbonsäurederivate sind im folgenden dargestellt: 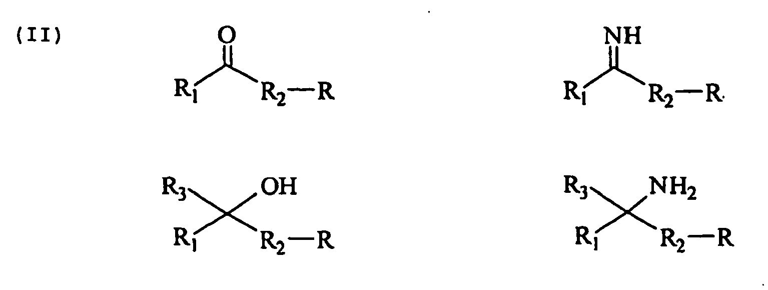 wobei R = Ester -CO-OR₂, Amid -CO-NH₂, substituiertes Amid -CO-NR₁R₂, Anhydrid -CO-O-COR₁, Nitril -CN, Iminoester -CNH-OR₂, Amidin -CNH-NH₂, substituiertes Amidin -CNH-NR₁R₂, Iminoderivate des Anhydrids -CNH-O-COR₁, -CNH-O-CNH-R₁ und -CNH-NH-CNH-R₁.
R₁ = Alkyl-, Alkenyl-, Alkinyl- und/oder Arylreste und/oder substituierte Alkyl-, Alkenyl-, Alkinyl und/oder Arylreste mit bis zu 20 Kohlenstoffatomen oder Wasserstoff H,
R₂ = Alkyl-, Alkenyl-, Alkinyl- und/oder Arylreste und/oder substituierte Alkyl-, Alkenyl-, Alkinyl- und/oder Arylreste mit bis zu 20 Kohlenstoffatomen,
R₃ = -OR₁, -NH₂, -NR₁R₂, -R₁N-CO-R₁ (Amidrest), -R₁N-CNH-R₁ (Amidinrest), -R₁N-CN (Cyanamidrest), -R₁N-CNH-NH-CN (Dicyandiamidrest)und -R₁N-CNH-NR₁R₁ (Guanidinrest).

Mit Vorteil ist das Oxocarbonsäurederivat ein Oxocarbonsäureester (III) und/oder ein Carbonsäureesterhemiketal (IV), 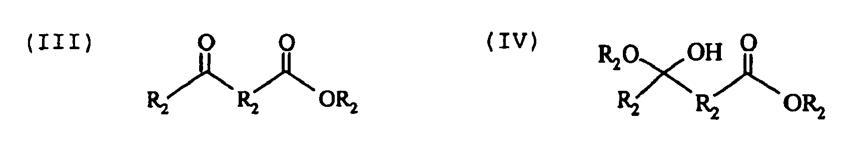 wobei die Reste R₂ gleich oder verschieden sein können.

Für die R₂ in Nachbarstellung zur Carbonylgruppe sind solche bevorzugt, die kein alpha-H besitzen, d.h. das zur Carbonylgruppe benachbarte C-Atom hat bevorzugterweise kein Wasserstoffatom gebunden.

Bevorzugt ist das Oxocarbonsäurederivat ein Aldehydcarbonsäurederivat, mit Vorteil ein Aldehydcarbonsäureester (V) und/oder ein Carbonsäureesterhemiacetal (VI), 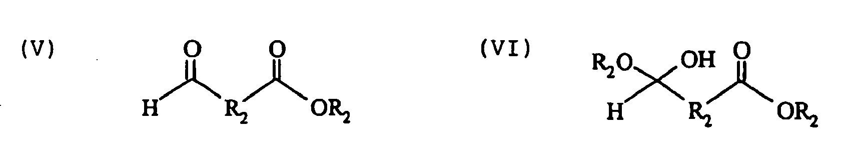 wobei die Reste R₂ gleich oder verschieden sein können.
Für die R₂ in Nachbarstellung zur Carbonylgruppe sind solche bevorzugt, die kein alpha-H besitzen, d.h. das zur Carbonylgruppe benachbarte C-Atom hat bevorzugterweise kein Wasserstoffatom gebunden.

Weiterhin mit Vorteil ist das Aldehydcarbonsäurederivat ein Glyoxylsäurester (VII) und/oder ein Glyoxylsäuresterhemiacetal (VIII), 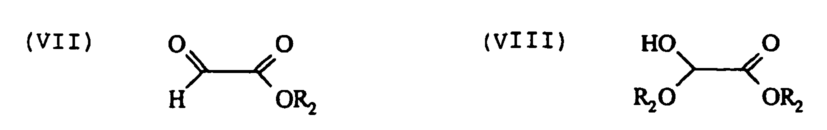 wobei die Reste R₂ gleich oder verschieden sein können.

In einer besonders bevorzugten Ausführungsform ist das Aldehydcarbonsäurederivat Glyoxylsäuremethylester-methylhemiacetal (GMHA; 2-Hydroxy-2-methoxy-essigsäuremethylester) (IX). 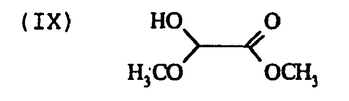 GMHA ist eine bei Raumtemperatur flüssige Verbindung, die unter Normaldruck bei Temperaturen von etwa 122 bis 124 °C unter Methanolabspaltung polymerisiert.

Verglichen mit Formaldehyd weist GMHA eine weitaus verminderte Reaktivität auf.

Unerwarteterweise reagiert GMHA mit Melamin, und zwar mit oder ohne Lösungsmittel und ohne Zusatz eines Katalysators zu einer sirupartigen Lösung.

Während man bei Reaktionen von Melamin mit Formaldehyd aufgrund der hohen Reaktivität des Formaldehyds ein Gemisch aus verschiedensten Produkten mit unterschiedlichem Substitutionsgrad erhält, ergibt sich bei der Reaktion von Melamin mit GMHA eine bessere Steuerbarkeit der Reaktion.

Bei der Reaktion von Melamin mit GMHA wird im primären Reaktionsschritt unter Abspaltung von Methanol 2-Hydroxy-2-Melaminyl-Essigsäuremethylester (Methyloxycarbonyl-hydroxymethin-melamin) (X) ausgebildet.

Eine Mehrfachsubstitution am Melamin ist möglich, da jede NH₂-Gruppe theoretisch zwei GMHA-Einheiten binden kann. 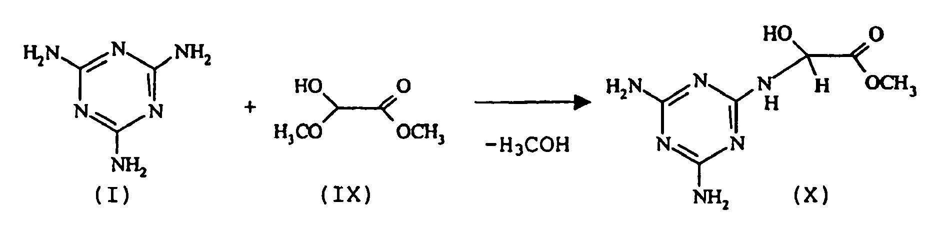 Bei der Umsetzung von Melamin mit GMHA ist es überraschenderweise möglich, Methanol als Lösungsmittel zu verwenden. Dies ist überraschend, da Methanol eigentlich die Rückreaktion fördern sollte. Methanol ist auch deshalb vorteilhaft, weil die entstehenden Reaktionsprodukte in Methanol löslich sind.

Bei leicht sauren Bedingungen mit einem pH-Wert zwischen etwa pH = 3 und pH = 7 erfolgt parallel zum primären Reaktionsschritt die Methylveretherung der Hydroxygruppe, das heißt die Reaktion von 2-Hydroxy-2-Melaminyl-Essigsäuremethylester (X) zu 2-Methoxy-2-Melaminyl-Essigsäuremethylester (XI).

2-Methoxy-2-Melaminyl-Essigsäuremethylester (XI) kann darüber hinaus auch gezielt durch Umsetzung von 2-Hydroxy-2-Melaminyl-Essigsäuremethylester (X) mit Methanol im Sauren, also durch Veretherung, hergestellt werden. 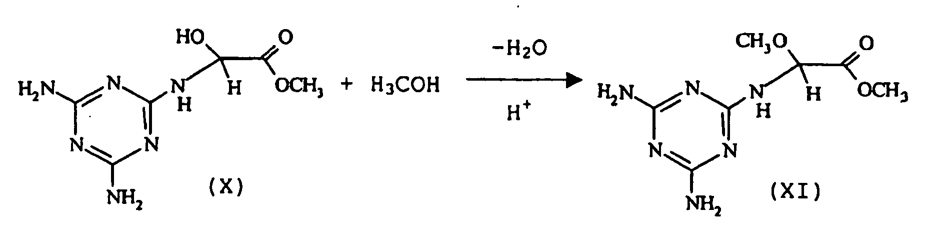 Analog zu Melamin-Formaldehydharzen treten miteinander verknüpfte Einheiten auf, die auch noch mehrfach substituiert sein können. Mögliche Vertreter mit sogenannter "Methin-Verbrückung" oder "Methin-oxy-Methin-Verbrückung" sind im Folgenden abgebildet:

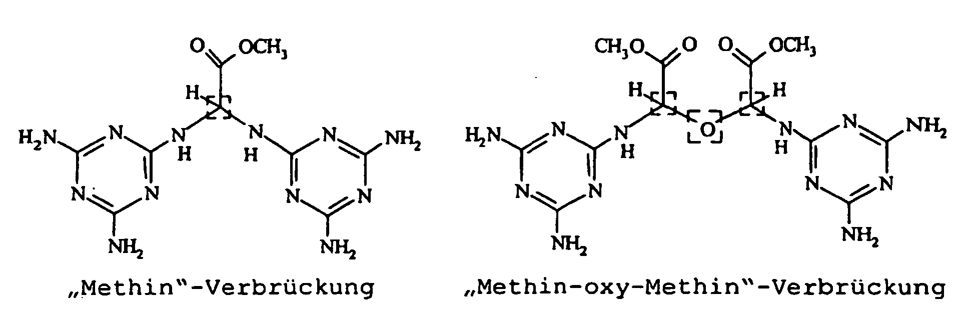

Im sauren Milieu stellt sich ein Gleichgewicht zwischen der Verbindung (X) und (X') ein, das aufgrund des stabilen, quasiaromatischen Melaminringes auf der Seite von (X) liegt. Bei längeren Reaktionszeiten und höheren Temperaturen entsteht aber aus (X') durch Abspaltung von Methanol (intramolekulare Amidisierung) der sehr stabile und schlecht lösliche Bicyclus (XII) (8-Hydroxy-9-Oxo-(4,5)-Dihydro-Imidazo[2,1-b]-2,4-Diamino -1,3,5-Triazin).

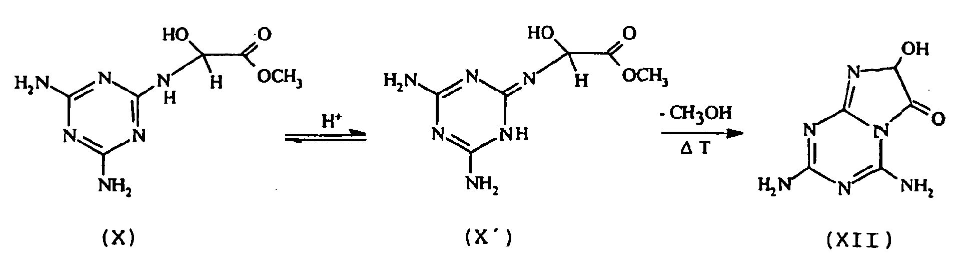

Die Rückspaltung der Verbindung (XII) zu einem Derivat von (X) kann durch Reaktion mit Nukleophilen, wie beispielsweise Alkoholen, Wasser und Aminen, bei höheren Temperaturen erreicht werden.

Bei der Reaktion von 3 GMHA-Einheiten mit Melamin und nachfolgender Abspaltung von Methanol entsteht als Grenzfall die Verbindung (XIII) (4,9,14-Trihydroxy-5,10,15-Tri-Oxo-Tris((4,5)-Dihydro-Imidazo) [2,1-β;2',1'-δ;2",1"-φ]-1, 3, 5-Triazin).

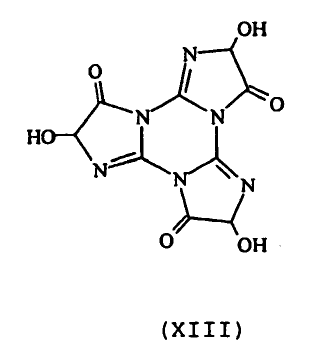

Die Verbindung (XII) reagiert bei weiterer Erwärmung unter Eliminierung zum gelborange gefärbten Chromophor (XIV) (9-Oxo-(2,5)-Dihydro-Imidazo[2,1-β]-2-Imino-4-Amino-1,3,5-Triazin).

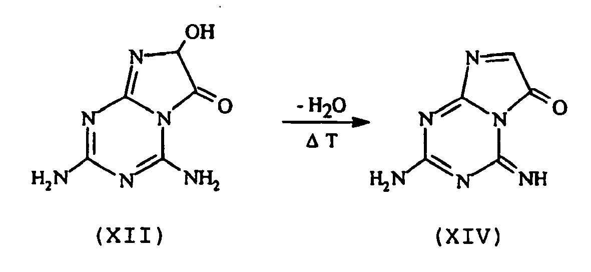

Die Herstellung der erfindungsgemäßen Aminotriazin-Kondensationsprodukte erfolgt durch die Umsetzung des Aminotriazines mit dem Oxocarbonsäurederivat bevorzugt in einem einstufigen Syntheseschritt.

Das Molverhältnis von Aminotriazin zu dem Oxocarbonsäurederivat beträgt etwa 1 : 1 bis 1 : 6, bevorzugt etwa 1 : 1,5 bis 1 : 6, besonders bevorzugt etwa 1 : 2,0 bis 1 : 4.

Es ist auch möglich, das Aminotriazin in Gegenwart eines Alkohols mit einer Oxocarbonsäure selbst umzusetzen, sodaß ein Oxocarbonsäureester insitu in der Reaktionsmischung gebildet wird.

In einer weiteren Ausführungsform der Erfindung ist neben einem Aminotriazin und mindestens einem Oxocarbonsäurederivat auch Formaldehyd und/oder Glyoxal und/oder Harnstoff in der Reaktionsmischung vorhanden.

Die Umsetzungen des Aminotriazines mit dem Oxocarbonsäurederivat können ohne Lösungsmittel erfolgen, bevorzugt werden sie jedoch in einem Lösungsmittel oder in einem Lösungsmittelgemisch durchgeführt. Hierfür können beispielsweise inerte Lösungsmittel wie Dimethylsulfoxid, Dimethylformamid oder Dioxan verwendet werden. Weiters ist es insbesondere möglich, Alkohole und/oder Wasser als Lösungsmittel einzusetzen.

Die primäre Umsetzung des Aminotriazines mit dem Oxocarbonsäurederivat kann im gesamten pH-Bereich von pH = 0 bis pH = 14 erfolgen. Bevorzugt erfolgt die Umsetzung im pH-Bereich von etwa 3 - 10.

Zur Einstellung des pH-Wertes können gängige Säuren, beispielsweise p-Toluolsulfonsäure, Amidosulfonsäure, Glyoxylsäure, Salpetersäure, Salzsäure, Schwefelsäure und Basen, wie beispielsweise Natriumhydroxid, Kaliumhydroxid, Diethanolamin, Triethanolamin, Morpholin verwendet werden.

Im sauren Bereich treten neben der primären Kondensation des Aminotriazines mit dem Oxocarbonsäurederivat auch Folgekondensationsreaktionen auf.

Die primäre Umsetzung des Aminotriazines mit dem Oxocarbonsäurederivat erfolgt in einem Temperaturbereich von etwa 20 bis 200 °C, bevorzugt von etwa 40 bis 160 °C und in einem Druckbereich von etwa 0 bis 15 bar, bevorzugt von etwa 0 bis 5 bar Überdruck. Die Reaktionszeit beträgt zwischen etwa 5 und 300 Minuten, bevorzugt zwischen etwa 15 und 120 Minuten.

Die Reaktion wird beispielsweise bis zum Auflösen des Aminotriazines oder bis zum gewünschten Umsatz geführt. Der Umsatz kann über gängige analytische Kontrollen wie beispielsweise Flüssigkeits-, Gaschromatographie, und/oder Infrarot-, UV-Spektroskopie ermittelt werden.

Die primären Reaktionsprodukte der erfindungsgemäßen Reaktion sind, im Gegensatz zu den bei der Kondensation von Aminotriazinen mit Formaldehyd erhaltenen Produkten, sowohl in organischen Lösungsmitteln als auch in Wasser gut löslich.

Mit den primären Reaktionsprodukten können leicht Folgereaktionen wie beispielsweise eine Veretherung, eine Umetherung, eine Veresterung, eine Umesterung oder auch eine Amidisierung oder Hydrolyse durchgeführt werden, wobei aus den Aminotriazin-Kondensationsprodukten Folgeprodukte (Derivate) erhalten werden.

Im Gegensatz dazu sind Formaldehyd-Kondensationsprodukte hinsichtlich der möglichen Folgereaktionen zum überwiegenden Großteil auf die Veretherung und die Umetherung beschränkt. Auf diese Weise kann ausgehend von den erfindungsgemäßen Aminotriazin-Kondensationsprodukten eine große Anzahl von leicht zugänglichen Derivaten hergestellt werden.

Unter den erfindungsgemäßen Aminotriazin-Kondensationsprodukten werden sowohl die primären Reaktionsprodukte als auch die möglichen Folgeprodukte der primären Reaktionsprodukte sowie Mischungen dieser beiden Komponenten verstanden.

Es ist möglich, die Folgereaktionen der erfindungsgemäßen Kondensationsprodukte im selben Reaktionsschritt wie die primäre Kondensation des Aminotriazines mit dem Oxocarbonsäurederivat durchzuführen.
Bevorzugt werden die Folgereaktionen der erfindungsgemäßen Kondensationsprodukte jedoch in einem zweiten Reaktionsschritt durchgeführt.

Bei der gleichzeitigen Durchführung einer Ver- oder, Umetherung beziehungsweise einer Ver- oder Umesterung parallel zur primären Umsetzung des Aminotriazines mit dem Oxocarbonsäurederivat wird die Reaktion im Sauren durchgeführt und ein Alkohol als Lösungsmittel verwendet, der dann zugleich als Reaktionspartner für die Ver- oder Umetherung beziehungsweise Ver- oder Umesterung dient.

Bei der Durchführung der Ver- oder Umetherung beziehungsweise der Ver- oder Umesterung in einem separaten zweiten Reaktionsschritt wird das primäre Reaktionsprodukt im Sauren in einen Alkohol oder in ein alkoholhältiges Lösungsmittelgemisch eingetragen, wobei der Alkohol nicht nur als Lösungsmittel sondern auch als Reaktionspartner für die Ver- oder Umetherung beziehungsweise die Ver- oder Umesterung dient.

Die Ver- oder Umetherung beziehungsweise die Ver- oder Umesterung wird prinzipiell im Sauren mit einem pH-Wert von kleiner als 7 durchgeführt, bevorzugt im pH-Bereich von etwa 3 - 6,5. Die Umsetzung erfolgt in einem Temperaturbereich von etwa 20 bis 200 °C, bevorzugt von etwa 40 bis 160 °C und in einem Druckbereich von etwa -1 bis 15 bar, bevorzugt von etwa -1 bis 5 bar Überdruck. Die Reaktionszeit beträgt zwischen etwa 5 und 300 Minuten, bevorzugt zwischen etwa 15 und 120 Minuten.

Die Reaktion wird beispielsweise bis zum Erhalt einer Lösung oder bis zum gewünschten Umsatz geführt. Der Umsatz kann über gängige analytische Kontrollen wie beispielsweise Flüssigkeits-, Gaschromatographie, und/oder Infrarot-, UV-Spektroskopie ermittelt werden.

Bei Verwendung des Alkohols als Reaktionspartner und/oder Lösungsmittel wird dieser in einem etwa 2- bis 10-fachen, bevorzugt in einem etwa 2- bis 5-fachen molaren Überschuß bezogen auf die zu modifizierenden Gruppen eingesetzt.

Falls ein Alkohol zur Ver- oder Umetherung beziehungsweise Ver- oder Umesterung verwendet wird, der höher siedet als das Abspaltungsprodukt, wird das Abspaltungsprodukt vorzugsweise bei der Umsetzung abdestilliert.

Falls der Alkohol sehr hoch oder überhaupt nicht siedet, kann er, in der gewünschten Menge, beispielsweise im erforderlichen Molverhältnis, in einem inerten Lösungsmittel gelöst, verwendet werden.

Folgende Alkohole sind mögliche Reaktionspartner für eine Ver- oder Umetherung beziehungsweise eine Ver- oder Umesterung: Aliphatische oder aromatische Alkohole, Diole oder Polyole; Polyvinylalkohole; Pentaerythrit, Dipentaerythrit; ungesättigte Alkohole, Diole oder Polyole, beispielsweise Allylalkohol oder Hydroxyethylmethacylat (HEMA); Poly-, Oligo-Ethylenglycol-Derivate, beispielsweise Simulsole; Oligo-, Hydroxycarbonsäurederivate, beispielsweise Caprolacton-derivate; Poly-, Oligo-Esterpolyole; Poly-, Oligo-Lactide; Zucker, Zuckerderivate; Stärke, Stärkederivate oder Cellulosederivate.

Die Amidisierung der erfindungsgemäßen Aminotriazin-Kondensationsprodukte erfolgt bevorzugt in einem separaten Reaktionsschritt. Sie erfolgt, indem das primäre Reaktionsprodukt des Aminotriazines mit dem Oxocarbonsäurederivat oder auch ein Folgeprodukt, beispielsweise ein ver- oder umgeethertes beziehungsweise ver- oder umgeestertes erfindungsgemäßes Reaktionsprodukt, in eine Ammoniak- oder Amin-Lösung eingetragen wird.

Die Amidisierung wird mit einem etwa 2- bis 3-fachen molaren Überschuß an Ammoniak oder Amin, bezogen auf die Carbonsäurefunktionalität durchgeführt. Als Amine werden beispielsweise primäre oder sekundäre aliphatische oder aromatische Amine verwendet. Die Amine werden bevorzugt in einem Lösungsmittel gelöst angewandt, wobei als Lösungsmittel beispielsweise Wasser oder Alkohole dienen können. Sie können aber auch als Reinstoffe eingesetzt werden, wobei dann das Amin selbst als Lösungsmittel fungiert. Der pH-Wert bei der Umsetzung ist alkalisch mit einem pH-Wert größer als 7, bevorzugt zwischen etwa 8 und 14. Er wird durch die Art und Konzentration des verwendeten Amins bestimmt.

Die Umsetzung erfolgt in einem Temperaturbereich von etwa 20 bis 200 °C, bevorzugt von etwa 20 bis 140 °C und in einem Druckbereich von etwa 0 bis 15 bar, bevorzugt von etwa 0 bis 5 bar Überdruck. Die Reaktionszeit beträgt zwischen etwa 5 und 600 Minuten, bevorzugt zwischen etwa 30 und 300 Minuten.

Die Reaktion wird beispielsweise bis zum Auskristallisieren des Carbonsäureamids oder bis zum gewünschten Umsatz geführt. Der Umsatz kann über gängige analytische Kontrollen wie beispielsweise Flüssigkeits-, Gaschromatographie, und/oder Infrarot-, UV-Spektroskopie ermittelt werden.

Durch partielle oder vollständige Hydrolyse der Carbonsäurefunktionalität des primären Reaktionsproduktes des Aminotriazins mit dem Oxocarbonsäurederivat entstehen Verbindungen mit Betainstruktur (Zwitterionen). Die so erhaltenen Verbindungen können durch Erhitzen reversibel zu einer Schmelze verflüssigt werden. Beim Abkühlen erstarren diese Verbindungen salzartig zu einem harten Klumpen.

Die Hydrolyse wird mit einem etwa 2- bis 5-fachen molaren Überschuß an Wasser, bezogen auf die Carbonsäurefunktionalität durchgeführt.

Beispielsweise wird bei der Hydrolyse eines Methylesters der entstehende Methanol abdestilliert.

Die Hydrolyse kann im gesamten pH-Bereich von 0 bis 14 durchgeführt werden, bevorzugt wird die Hydrolyse aber im sauren pH-Bereich zwischen 4 und 6.5 durchgeführt.

Die Umsetzung erfolgt in einem Temperaturbereich von etwa 20 bis 200 °C, bevorzugt von etwa 20 bis 140 °C und in einem Druckbereich von etwa 0 bis 15 bar, bevorzugt von etwa 0 bis 5 bar Überdruck. Die Reaktionszeit beträgt zwischen etwa 5 und 600 Minuten, bevorzugt zwischen etwa 30 und 300 Minuten.

Die Reaktion wird bis zum gewünschten Umsatz geführt. Der Umsatz kann über gängige analytische Kontrollen wie beispielsweise Flüssigkeits-, Gaschromatographie, und/oder Infrarot-, UV-Spektroskopie ermittelt werden.

Sowohl nach der primären Umsetzung des Aminotriazines mit dem Oxocarbonsäurederivat als auch nach möglichen Folgereaktionen der Aminotriazin-Kondensationsprodukte werden sirupartige Lösungen erhalten, deren Gehalte an Reaktionsprodukten zwischen etwa 5 und 95 Gew %, bevorzugt zwischen etwa 25 und 75 Gew% und besonders bevorzugt zwischen etwa 30 und 60 Gew% liegen.

Die erfindungsgemäßen Reaktionsprodukte können vollständig oder teilweise gelöst sein, wobei sie im festen oder flüssigen Aggregatzustand vorliegen können.

Zur Aufarbeitung können die entstandenen Lösungen im Vakuum mittels Destillation aufkonzentriert oder lösungsmittelfrei gemacht werden. Dies erfolgt beispielsweise in Rührreaktoren mit Destillationsaufsatz, in Dünnschichtverdampfern oder in Filmtrudern.

Sollten die Aminotriazin-Kondensationsprodukte vollständig oder teilweise als feste Produkte anfallen werden diese durch Filtration abgetrennt und mittels Vakuum oder Trockenstickstoff unter Temperaturerhöhung getrocknet.

Die aufkonzentrierten und/oder lösungsmittelfreien Reaktionsprodukte können beispielsweise in einem Extruder, unter Temperaturerhöhung bis auf etwa 250 °C, weiterkondensiert werden. Die so erhaltene Schmelze wird nach dem Austritt aus dem Extruder abgekühlt und beim Abkühlen konfektioniert.

Die erfindungsgemäßen Aminotriazin-Kondensationsprodukte können durch Temperatureinwirkung weiterkondensiert und/oder ausgehärtet werden. Die Aushärtung kann in allen pH-Bereichen erfolgen. Bevorzugt werden die Produkte im sauren pH-Bereich von etwa pH 3 - 6,5 ausgehärtet. Die Temperaturen bei der Aushärtung betragen etwa 90 bis 250 °C, bevorzugt etwa 140 bis 190 °C. Die Dauer des Aushärtungsvorganges beträgt etwa 0,5 bis 30 Minuten, bevorzugt etwa 3 bis 10 Minuten.

Erfindungsgemäße Aminotriazin-Kondensationsprodukte die ungesättigte Struktureinheiten, wie beispielsweise C=C Doppelbindungen, enthalten, können durch radikalische oder ionische Polymerisation vernetzt werden. Die Polymersiation kann als Homopolymerisation oder auch in Mischungen mit anderen ungesättigten Monomeren, wie beispielsweise Acrylaten, ungesättigten Polyestern oder Styrolen, als Block- oder Copolymerisation durchgeführt werden. Als Initiatoren für die Polymerisation können Diazoverbindungen, Peroxide, ionische Verbindungen oder auch UV-Licht eingesetzt werden.

Ein Vorteil der erfindungsgemäßen Aminotriazin-Kondensationsprodukte ist, daß sie frei von Formaldehyd sind. Die aus herkömmlichen Aminotriazin-Kondensationsprodukten bekannte Problematik von freigesetztem Formaldehyd tritt bei den erfindungsgemäßen, neuen Aminotriazin-Kondensationsprodukten nicht auf.

GMHA als Oxocarbonsäurederivat beispielsweise weist bei weitem nicht die gesundheitliche Bedenklichkeit des Formaldehyds auf. GMHA ist großtechnisch verfügbar, es ist eine Flüssigkeit, die sowohl in Wasser als auch in den gängigen organischen Lösungsmitteln löslich ist.

Demgegenüber ist Formaldehyd ein Gas, das großtechnisch fast ausschließlich als wässrige Lösung oder als festes, sehr schwer lösliches Paraformaldehyd erhältlich ist. Deshalb ist der überwiegende Großteil der Formaldehydharze entweder auf wässrige Systeme beschränkt, oder Paraformaldehyd muss durch einen zusätzlichen reaktiven Depolymerisationsschritt zu Formaldehyd erst den Reaktionspartnern zugänglich gemacht werden.

Ein weiterer, entscheidender Vorteil der neuartigen, erfindungsgemäßen Aminotriazin-Kondensationsprodukte gegenüber gängigen Formaldehyd-Aminotriazin-Kondensationsprodukten liegt in den über das Oxocarbonsäurederivat in das Kondensationsprodukt und letztlich auch in das Aminotriazin eingebrachten funktionellen Gruppen begründet.

Sie ermöglichen es in einfacher Weise, neuartige Aminotriazin-Kondensationsprodukte mit einer großen Bandbreite an Strukturen und Derivaten, wie beispielsweise Ester, Amide, Ether, Etherpolyole, Esterpolyole, und physikalischen Eigenschaften, wie beispielsweise festem oder flüssigem Aggregatzustand, hydrophobe oder hydrophile Eigenschaften, herzustellen.

Demgegenüber sind Formaldehyd-Aminotriazin-Kondensationsprodukte, bedingt durch die mangelnde Funktionalität des Formaldehyds, weitgehend auf Ver- und Umetherungsreaktionen beschränkt.

Die erfindungsgemäßen Aminotriazin-Kondensationsprodukte können zur Herstellung von Harzen wie beispielsweise Imprägnierharze, Verbundharze, Preßmassenharze, Hybridharze mit Melamin-Formaldehyd-, Acryl-, Epoxid-, Polyurethan-, ungesättigten Polyester- und Alkydharzen, Harzadditiven, Harzflottenstabilisatoren, (latenten) Härtern, Klebstoffen, Schäumen, Fasern, Mikrokapseln, Formkörpern, Laminaten, Lackmodifikatoren, Vernetzern, Lackzusätzen, Materialien mit flammhemmenden Eigenschaften und Chromatographiematerialien verwendet werden. Weiters können sie als organische Synthesebausteine für Spezialchemikalien und Pharmaka oder als Polymermodifikatoren und Agrochemikalien eingesetzt werden. Darüber hinaus besitzen die erfindungsgemäßen Produkte Potential im Bereich der UV-Schutz- und Hautpflegeprodukte.

Über die Carbonsäurefunktionalität von Derivaten der erfindungsgemäßen Aminotriazin-Kondensationsprodukte ist der Einbau in eine Vielzahl von Polymeren möglich. Beispielsweise durch Ver- oder Umetherung beziehungsweise Ver- oder Umesterung von (X) mit Diolen oder Polyolen, wie etwa Ethylenglycol oder Polyethylenglycolderivaten, ist eine Einkondensierung solcher Derivate bei der polyesterherstellung möglich.

Eine weitere Anwendung der erfindungsgemäßen Aminotriazin-Kondensationsprodukte besteht in der Mischung und chemischen Umsetzung mit (un-) modifizierten Melamin-Formaldehydharzen, mit Epoxidharzen, Polyurethanharzen, ungesättigten Polyesterharzen und Alkydharzen zur Herstellung von Hybridharzsystemen.

Durch Umsetzung von ungesättigten erfindungsgemäßen Aminotriazin-Kondensationsprodukten mit Acrylaten, ungesättigten Polyestern oder Styrolen durch radikalische oder ionische Polymerisation können neuartige Copolymere mit zum Beispiel erhöhter Flammfestigkeit hergestellt werden.

Durch die Möglichkeit wasserfreie Produkte der erfindungsgemäßen Aminotriazin-Kondensationsprodukte herstellen zu können kann problemlos eine Umsetzung mit Isocyanaten zu Polyurethanen erfolgen und dadurch kann das Aminotriazin reaktiv in das Polyurethan-Netzwerk eingebaut werden.

Ein weiteres Einsatzgebiet vor allem für die diol- oder polyol-modifizierten Aminotriazin-Kondensationsprodukte sind intumeszierende Flammhemmersysteme.

Die Reaktionsprodukte der erfindungsgemäßen Reaktion sind überwiegend chirale Verbindungen, die selbst zu Polymeren aufgebaut werden können oder in andere Polymere, wie beispielsweise Polyester, eingebaut werden können. Die dadurch erhaltenen chiralen Polymere können zur Auftrennung von racemischen Gemischen eingesetzt werden.

### Beispiele

### Beispiel 1 - Umsetzung von GMHA mit Melamin in Methanol

126 g Melamin (1 Mol), 360 g GMHA (3 Mol) und 250 g Methanol (7,8 Mol) werden in einem Kolben mit Rührer und Rückflußkühler vorgelegt. Der pH-Wert beträgt etwa 4,5. Die Suspension wird unter Rühren 60 Minuten auf Rückfluß erhitzt. Dabei entsteht eine klare Lösung der erfindungsgemäßen Melamin-Kondensationsprodukte mit etwa 53 Gew% Feststoffgehalt. Nach dem Abdampfen des Lösungsmittels im Vakuum bleibt eine bei Raumtemperatur hochviskose Masse übrig, die in Alkoholen, Wasser, Aceton und Estern löslich ist.

### Beispiel 2 - Umsetzung von GMHA mit Melamin in Methanol

126 g Melamin (1 Mol), 360 g GMHA (3 Mol) und 145 g Methanol (4,5 Mol) werden in einem Kolben mit Rührer und Rückflußkühler vorgelegt. Der pH-Wert beträgt etwa 4,5. Die Suspension wird unter Rühren auf Rückfluß erhitzt bis alles gelöst ist. Dabei entsteht eine Lösung der erfindungsgemäßen Melamin-Kondensationsprodukte analog XI mit etwa 53 Gew% Feststoffgehalt. Nach dem Abdampfen des Lösungsmittels im Vakuum bleibt eine bei Raumtemperatur hochviskose Masse übrig, die in Alkoholen, Wasser, Aceton und Estern löslich ist.

### Beispiel 3 - Umsetzung von GMHA mit Melamin in Butanol

126 g Melamin (1 Mol), 360 g GMHA (3 Mol) und 580 g Butanol (7,8 Mol) werden in einem Kolben mit Rührer und Rückflußkühler vorgelegt. Der pH-Wert beträgt etwa 4,5. Die Suspension wird unter Rühren 60 Minuten auf Rückfluß erhitzt. Dabei entsteht eine klare Lösung der erfindungsgemäßen Melamin-Kondensationsprodukte mit etwa 50 Gew% Feststoffgehalt. Nach dem Abdampfen des Lösungsmittels im Vakuum bleibt eine bei Raumtemperatur hochviskose Masse übrig, die in Butanol, Aceton und Estern löslich ist (unlöslich in Methanol, Wasser).

### Beispiel 4 - Umsetzung von GMHA mit Melamin in n-Butanol

126 g Melamin (1 Mol), 360 g GMHA (3 Mol) werden in einem Kolben mit Rührer und Rückflußkühler vorgelegt. Der pH-Wert beträgt etwa 4,5. Die Suspension wird unter Rühren auf ca. 50 °C erhitzt. Nach 10 Minuten wird zu der niedrigviskosen Suspension 580 g n-Butanol (7,8 Mol) zugegeben und auf Rückfluß erhitzt bis eine klare Lösung entsteht. Nach dem Abdampfen des Lösungsmittels im Vakuum bleibt eine bei Raumtemperatur hochviskose Masse an erfindungsgemäßen mit n-Butanol umgeetherten/umgeesterten Kondensationsprodukten zurück, die in Butanol, Aceton und Estern löslich sind (unlöslich in Methanol, Wasser).

### Beispiel 5 - Partielle Umetherung/Umesterung des Reaktionsprodukts aus Beispiel 3 mit Simulsol BPLE

300 g lösungsmittelfreies Reaktionsprodukt aus Beispiel 3 wird in 180 g Simulsol BPLE (2 OH-Gruppen pro Molekül, M = 490 g/mol) bei 60 °C unter Rühren gelöst. Der pH-Wert beträgt etwa 5. Die Reaktionsmischung wird auf etwa 120 °C erhitzt und unter Vakuum werden etwa 42 g Butanol abdestilliert. Die Reaktionsmischung wird dabei sehr viskos. Es wurde aufgrund der Stöchiometrie ein Fünftel aller Ether- bzw. Estergruppen mit Simulsol umgeethert/umgeestert. Das Reaktionsprodukt ist bei Raumtemperatur gummiartig-viskos und ist in Aceton löslich.

### Beispiel 6 - Amidisierung des Reaktionsprodukts aus Beispiel 1 mit Ammoniak

130 g lösungsmittelfreies Reaktionsprodukt aus Beispiel 1 wird in 200 ml 25 Gew% Ammoniak (2,7 Mol) bei 40 °C gelöst, wobei nach kurzer Zeit ein weißer Niederschlag ausfällt. Es wird bei etwa 25 - 30 °C noch 2 Stunden gerührt. Der Niederschlag wird abfiltriert und bei etwa 60 °C im Vakuum getrocknet. Ausbeute etwa 105 g Amid (91 %). Das Produkt schmilzt unter Weiterreaktion ab 160 °C.

### Beispiel 7 - Umsetzung des Reaktionsproduktes aus Beispiel 2 mit n-Butanol

215 g des lösungsmittelfreien Reaktionsproduktes aus Beispiel 2 wird in einem Kolben mit Rührer und Destillationsbrücke in 370 g n-Butanol (5 Mol) eingetragen. Die milchig trübe Mischung wird in 15 Minuten auf Rückfluß erhitzt, wobei dann ein Gemisch aus Methanol/Butanol langsam überdestilliert. Nach ca. 10 Minuten weiterer Reaktionszeit bildet sich eine klare Lösung. Nach weiteren 5 Minuten wird die Lösung abgekühlt und unter Vakuum das gesamte Lösungsmittel abdestilliert. Zurück bleibt eine bei Raumtemperatur hochviskose Masse an erfindungsgemäßen mit n-Butanol umgeetherten/umgeesterten Kondensationsprodukten, die in Butanol, Aceton und Estern löslich sind (unlöslich in Methanol, Wasser).

### Beispiel 8 - Reaktion von Melamin mit GMHA in der Schmelze

126 g Melamin (1 Mol) und 240 g GMHA (2 Mol) werden in einem Kolben mit Rührer und Rückflußkühler vorgelegt. Der pH-Wert beträgt etwa 4,5. Die Suspension wird langsam unter Rühren erhitzt bis alles in Lösung geht, wobei die Suspension von dick- über dünnflüssig und dann wieder in dickflüssig übergeht und sich Methanol als Reaktionsprodukt bildet. Dauer ca. 35 Minuten. Nach dem Abdampfen des Methanols im Vakuum bleibt eine reversibel aufschmelzende, bei Raumtemperatur harte Masse an erfindungsgemäßen Kondensationsprodukten analog X zurück. Das Produkt ist wenig löslich in Alkoholen. In Wasser ist das Produkt zwar löslich, es erfolgt aber Hdrolyse (s. Beispiel 9).

### Beispiel 9 - Hydrolyse des Reaktionsproduktes aus Beispiel 8

280 g Reaktionsprodukt aus Beispiel 8 wird in einem Kolben mit Rückflußkühler unter Rühren bei 80 °C aufgeschmolzen und mit 100 g Wasser versetzt. Der pH-Wert beträgt ca. 4,5. Innerhalb von 10 Minuten vereinigen sich die beiden Phasen und es entsteht eine klare Lösung. Methanol wird abgespalten. Nach weiteren 10 Minuten Reaktionszeit wird die Lösung abgekühlt und unter Vakuum das Lösungsmittel abdestilliert. Der Rückstand ist reversibel aufschmelzbar und erstarrt salzartig als harte Masse (Betainstruktur). Das Produkt ist in Wasser löslich.

### Beispiel 10 - Umsetzung des Reaktionsproduktes aus Beispiel 7 mit HEMA (Hydroxyethylmethacrylat)

320 g lösungsmittelfreies Reaktionsprodukt aus Beispiel 7 wird mit 200 g HEMA (1,5 Mol) und 0,3 g einer HALS-Verbindung (sterisch gehindertes Amin) als Polymerisationsinhibitor unter Rühren in einem Kolben auf 100 °C erhitzt. Unter Vakuum werden innerhalb von 30 Minuten ca. 140 g Butanol abdestilliert. Nach dem Abkühlen bleiben erfindungsgemäße mit HEMA umgeetherte/umgeesterte Kondensationsprodukte zurück, die bei Raumtemperatur hochviskos und in Styrol löslich sind.

## Patentansprüche

1. Formaldehydfreies Aminotriazin-Kondensationsprodukt, insbesondere Melamin-Kondensationsprodukt,
herstellbar durch
die Reaktion eines Aminotriazines, insbesondere Melamin, mit mindestens einem Oxocarbonsäurederivat, wobei das Oxocarbonsäurederivat
- sowohl mindestens eine Oxogruppe (-CO-) oder ein Derivat einer Oxogruppe aus der Gruppe umfassend ein Hemiketal, Hemiacetal, Imin, Hemiaminal, Hemiamidal sowie deren Aminoderivate,
- als auch mindestens ein Derivat einer Carboxylgruppe aus der Gruppe umfassend einen Ester, Amid, Amidin, Iminoester, Nitril, Anhydrid sowie die Iminoderivate des Anhydrids
im Molekül aufweist.

2. Aminotriazin-Kondensationsprodukt nach Anspruch 1, **dadurch gekennzeichnet, dass** mindestens ein Oxocarbonsäurederivat aus der Gruppe folgender Verbindungen stammt: 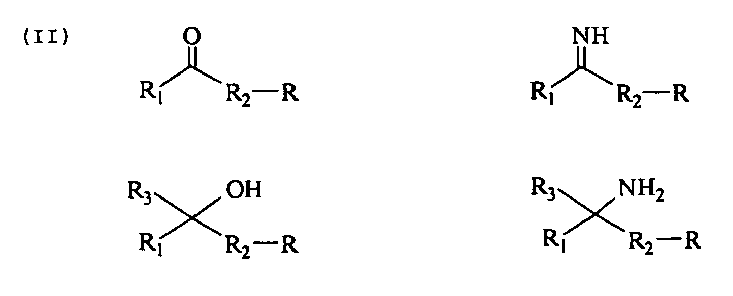 wobei R = Ester -CO-OR₂, Amid -CO-NH₂, substituiertes Amid -CO-NR₁R₂, Anhydrid -CO-O-CO-R₁, Nitril -CN, Iminoester -CNH-OR₂, Amidin -CNH-NH₂, substituiertes Amidin -CNH-NR₁R₂, Iminoderivate des Anhydrids -CNH-O-CO-R₁, -CNH-O-CNH-R₁ und -CNH-NH-CNH-R₁,
R₁ - Alkyl-, Alkenyl-, Alkinyl- und/oder Arylreste und/oder substituierte Alkyl-, Alkenyl-, Alkinyl- und/oder Arylreste mit bis zu 20 Kohlenstoffatomen oder Wasserstoff H,
R₂ = Alkyl-, Alkenyl-, Alkinyl- und/oder Arylreste und/oder substituierte Alkyl-, Alkenyl-, Alkinyl- und/oder Arylreste mit bis zu 20 Kohlenstoffatomen,
R₃ = -OR₁, -NH₂, -NR₁R₂, -R₁N-CO-R₁ (Amidrest), -R₁N-CNH-R₁ (Amidinrest), -R₁N-CN (Cyanamidrest), -R₁N-CNH-NH-CN (Dicyandiamidrest)und -R₁N-CNH-NR₁R₁ (Guanidinrest).

3. Aminotriazin-Kondensationsprodukt nach mindestens einem der vorangehenden Ansprüche,
**dadurch gekennzeichnet,**
**dass** mindestens ein Oxocarbonsäurederivat ein Oxocarbonsäureester (III) und/oder ein Carbonsäureesterhemiketal (IV) ist, 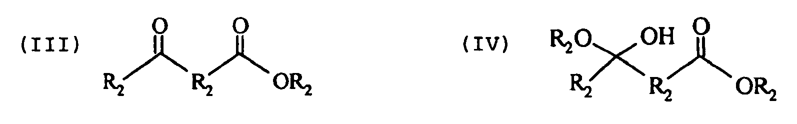 wobei R₂ gleich oder verschieden sein können.

4. Aminotriazin-Kondensationsprodukt nach mindestens einem der vorangehenden Ansprüche,
**dadurch gekennzeichnet,**
**dass** mindestens ein Oxocarbonsäurederivat ein Aldehydcarbonsäureester (V) und/oder ein Carbonsäureesterhemiacetal (VI) ist, 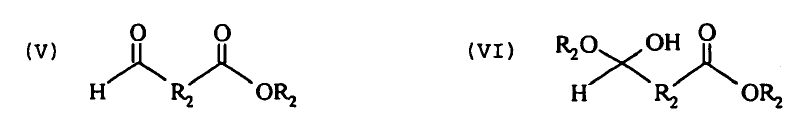 wobei R₂ gleich oder verschieden sein können.

5. Aminotriazin-Kondensationsprodukt nach mindestens einem der vorangehenden Ansprüche,
**dadurch gekennzeichnet,**
**dass** mindestens ein Oxocarbonsäurederivat ein Glyoxylsäurester (VII) und/oder ein Glyoxylsäuresterhemiacetal (VIII) ist, 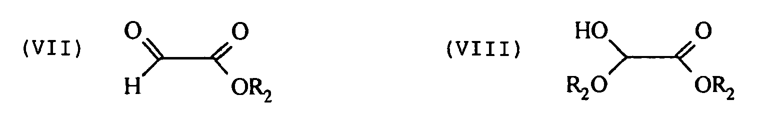 wobei R₂ gleich oder verschieden sein können.

6. Aminotriazin-Kondensationsprodukt nach mindestens einem der vorhergehenden Ansprüche,**dadurch gekennzeichnet,**
**dass** mindestens ein Oxocarbonsäurederivat
Glyoxylsäuremethylester-methylhemiacetal (GMHA; 2-Hydroxy-2-methoxy-essigsäuremethylester) (IX) ist.

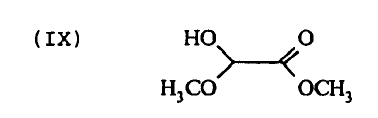

7. Aminotriazin-Kondensationsprodukt nach mindestens einem der vorhergehenden Ansprüche, **dadurch gekennzeichnet, dass** das Molverhältnis von Aminotriazin zum Oxocarbonsäurederivat 1:2 bis 1:4 beträgt.

8. Aminotriazin-Kondensationsprodukt nach mindestens einem der vorhergehenden Ansprüche,
**dadurch gekennzeichnet, dass** die Reaktion in einem Lösungsmittel, insbesondere Wasser, Alkohol oder einem inerten Lösungsmittel stattfindet.

9. Aminotriazin-Kondensationsprodukt nach mindestens einem der vorhergehenden Ansprüche, **dadurch gekennzeichnet, dass** die Reaktion bei pH = 3 bis 10 erfolgt.

10. Aminotriazin-Kondensationsprodukt nach mindestens einem
der vorhergehenden Ansprüche, **dadurch gekennzeichnet, dass** das Kondensationsprodukt sowohl in organischen Lösungsmitteln, als auch in Wasser löslich ist.

11. Aminotriazin-Kondensationsprodukt nach mindestens einem der vorhergehenden Ansprüche, **dadurch gekennzeichnet, dass** es durch Folgereaktionen, welche gleichzeitig mit und/oder im Anschluß an die primäre Reaktion ablaufen, gebildet wird.

12. Aminotriazin-Kondensationsprodukt nach Anspruch 11, **dadurch gekennzeichnet, dass** die Folgereaktion eine Veretherung, eine Umetherung, eine Veresterung, eine Umesterung, eine Amidisierung oder eine Hydrolyse ist.

13. Aminotriazin-Kondensationsprodukt nach Anspruch 11, **dadurch gekennzeichnet, dass** die Folgereaktion im Anschluß an die primäre Reaktion durchgeführt wird.

14. Aminotriazin-Kondensationsprodukt nach einem der vorhergehenden Ansprüche, **dadurch gekennzeichnet, dass** nach der Reaktion sirupartige Lösungen mit einem Gehalt von 5 bis 95 Gew%, bevorzugt von 25 bis 75 Gew%, besonders bevorzugt von 30 bis 60 Gew% erhalten werden.

15. Verwendung von Aminotriazin-Kondensationsprodukten, insbesondere Melamin-Kondensationsprodukten nach mindestens einem der vorangehenden Ansprüche,
**gekennzeichnet durch** die Herstellung von Harzen,
Harzadditiven, Harzflottenstabilisatoren, (latenten) Härtern, Hybridharzsystemen, Klebstoffen, Schäumen, Fasern, Mikrokapseln, Formkörpern, Laminaten, Vernetzern, Lackzusätzen, Chromatographiematerialien, organischen Synthesebausteinen, Polymermodifikatoren, Agrochemikalien, UV-Schutz- und Hautpflegeprodukten, Polyurethanen sowie Materialien mit flammhemmenden Eigenschaften.

16. Verfahren zur Herstellung von Aminotriazin - Kondensationsprodukten nach mindestens einem der Ansprüche 1 bis 14,
**dadurch gekennzeichnet, dass** ein Aminotriazin, insbesondere Melamin in flüssiger Phase mit mindestens einem Qxocarbonsäurederivat umgesetzt wird.

17. Verfahren nach Anspruch 16,
**dadurch gekennzeichnet, dass** nach der primären Umsetzung eine Derivatisierung, insbesondere eine Veretherung, eine Umetherung, eine Veresterung, eine Umesterung, eine Amidisierung oder eine Hydrolyse durchgeführt wird.

18. Verfahren nach Anspruch 16 oder 17,
**dadurch gekennzeichnet, dass** das Reaktionsprodukt aufkonzentriert, abfiltriert, getrocknet, durch Temperaturerhöhung weiterkondensiert und/oder ausgehärtet wird.

## Claims

1. A formaldehyde free aminotriazine condensation product, in particular melamine condensation product,
producible by
the reaction of aminotriazine, in particular melamine, with at least one oxocarboxylic acid derivative, whereby the oxocarboxylic acid derivative
- has not only at least one oxo group (-CO-) or a derivative of an oxo group out of the group comprising a hemiketal, hemiacetal, imine, hemiaminal, hemiamidal, and amino derivatives thereof,
- but also at least one derivative of a carboxyl group out of the group comprising an ester, amide, amidine, imino ester, nitrile, anhydride, and also the imino derivatives of the anhydride
in the molecule.

2. The aminotriazine condensation product as claimed in claim 1, **characterized in that** at least one oxocarboxylic acid derivative originates from the group of the following compounds: 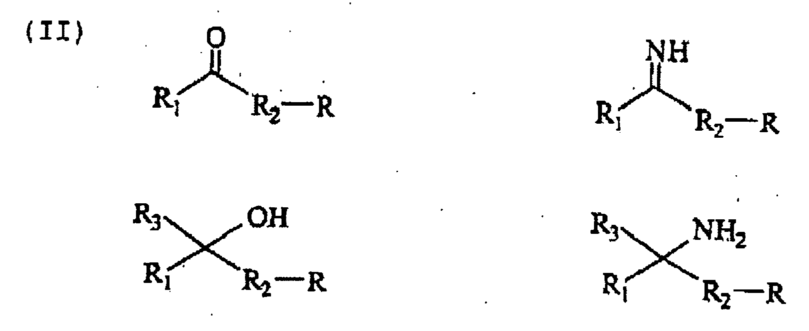 where
R = ester -CO-OR₂, amide -CO-NH₂, substituted amide -CO-NR₁R₂, anhydride -CO-O-CO-R₁, nitrile -CN, imino ester - CNH-OR₂, amidine -CNH-NH₂, substituted amidine -CNH-NR₁R₂, imino derivatives of the anhydride -CNH-O-CO-R₁, -CNH-O-CNH-R₁ and -CNH-NH-CNH-R₁,
R₁ = alkyl, alkenyl, alkynyl and/or aryl radicals and/or substituted alkyl, alkenyl, alkynyl and/or aryl radicals having up to 20 carbon atoms or hydrogen H,
R₂ = alkyl, alkenyl, alkynyl and/or aryl radicals and/or substituted alkyl, alkenyl, alkynyl and/or aryl radicals having up to 20 carbon atoms,
R₃ = -OR₁, -NH₂, -NR₁R₂, -R₁N-CO-R₁ (amide radical), -R₁N-CNH-R₁ (amidine radical), -R₁N-CN (cyanoamide radical), - R₁N-CNH-NH-CN (dicyanodiamide radical) and -R₁N-CNH-NR₁R₁ (guanidine radical).

3. The aminotriazine condensation product as claimed in at least one of the preceding claims,
**characterized in that**
at least one oxocarboxylic acid derivative is an oxocarboxylic ester (III) and/or a carboxylic ester hemiketal (IV), 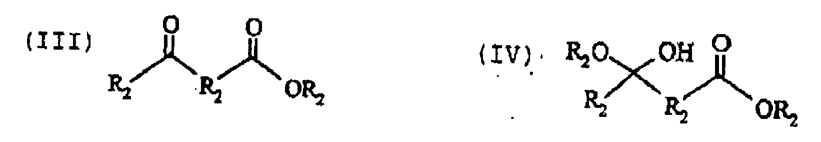 where R₂ may be identical or different.

4. The aminotriazine condensation product as claimed in at least one of the preceding claims,
**characterized in that**
at least one oxocarboxylic acid derivative is an aldehydecarboxylic ester (V) and/or a carboxylic ester hemiacetal (VI), 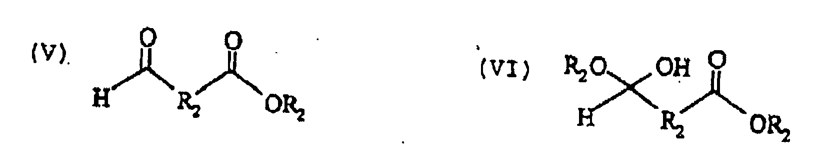 where R₂ may be identical or different.

5. The aminotriazine condensation product as claimed in at least one of the preceding claims,
**characterized in that**
at least one oxocarboxylic acid derivative is a glyoxylic ester (VII) and/or a glyoxylic ester hemiacetal (VIII), 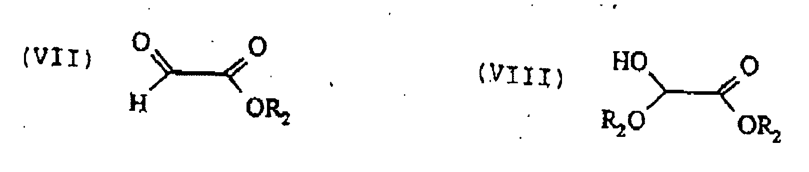 where R₂ may be identical or different.

6. The aminotriazine condensation product as claimed in at least one of the preceding claims, **characterized in that** at least one oxocarboxylic acid derivative is glyoxylic methyl ester methyl hemiacetal (GMHA; methyl 2-hydroxy-2-methoxyacetate) (IX).

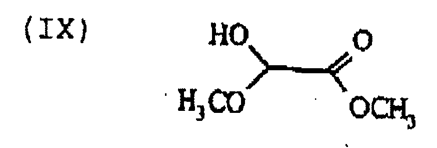

7. The aminotriazine condensation product as claimed in at least one of the preceding claims, **characterized in that** the molar ratio of aminotriazine to the oxocarboxylic acid derivative is 1:2 to 1:4.

8. The aminotriazine condensation product as claimed in at least one of the preceding claims,
**characterized in that** the reaction is carried out in a solvent, in particular water, alcohol or an inert solvent.

9. The aminotriazine condensation product as claimed in at least one of the preceding claims, **characterized in that** the reaction takes place at pH = 3 to 10.

10. The aminotriazine condensation product as claimed in at least one of the preceding claims, **characterized in that** the condensation product is soluble both in organic solvents and also in water.

11. The aminotriazine condensation product as claimed in at least one of the preceding claims, **characterized in that** it is formed by secondary reactions which occur at the same time as and/or following the primary reaction.

12. The aminotriazine condensation product as claimed in claim 11, **characterized in that** the secondary reaction is an etherification, a transetherification, an esterification, a transesterification, an amidation or a hydrolysis.

13. The aminotriazine condensation product as claimed in claim 11, **characterized in that** the secondary reaction is carried out following the primary reaction.

14. The aminotriazine condensation product as claimed in one of the preceding claims, **characterized in that,** after the reaction, syrup-like solutions with a content of from 5 to 95% by weight, preferably from 25 to 75% by weight, particularly preferably from 30 to 60% by weight, are obtained.

15. The use of aminotriazine condensation products, in particular melamine condensation products, as claimed in at least one of the preceding claims, **characterized by** the preparation of resins, resin additives, resin liquor stabilizers, (latent) hardeners, hybrid resin systems, adhesives, foams, fibers, microcapsules, moldings, laminates, crosslinkers, coating additives, chromatography materials, organic synthesis building blocks, polymer modifiers, agrochemicals, UV protection and skincare products, polyurethanes, and materials with flame-resistant properties.

16. A method for the production of aminotriazine condensation products as claimed in at least one of claims 1 to 14,
**characterized in that** an aminotriazine, in particular melamine, is reacted in a liquid phase with at least one oxocarboxylic acid derivative.

17. The method as claimed in claim 16,
**characterized in that,** after the primary reaction, a derivatization, in particular an etherification, a transetherification, an esterification, a transesterification, an amidation or a hydrolysis, is carried out.

18. The method as claimed in claim 16 or 17,
**characterized in that** the reaction product is concentrated, filtered off, dried, further condensed by increasing the temperature and/or cured.

## Revendications

1. Produit de condensation d'aminotriazine sans formaldéhyde, en particulier produit de condensation de mélamine, pouvant être produit par la réaction d'une aminotriazine, en particulier de la mélamine, avec au moins un dérivé d'acide oxocarboxylique, où le dérivé d'acide oxocarboxylique comporte dans la molécule
- aussi bien au moins un groupe oxo (-CO-) ou un dérivé d'un groupe oxo du groupe comprenant un hémicétal, un hémiacétal, une imine, un hémiaminal, un hémiamidal ainsi que leurs dérivés amino,
- qu'au moins un dérivé d'un groupe carboxyle du groupe comprenant un ester, un amide, une amidine, un iminoester, un nitrile, un anhydride ainsi que les dérivés imino de l'anhydride.

2. Produit de condensation d'aminotriazine selon la revendication 1 **caractérisé en ce qu'**au moins un dérivé d'acide oxocarboxylique est issu du groupe des composés suivants : 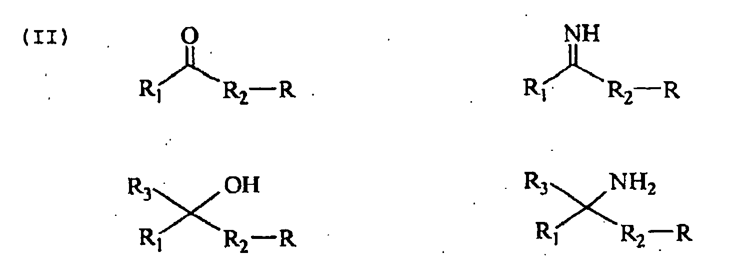 où R = ester -CO-OR₂, amide -CO-NH₂, amide substitué -CO-NR₁R₂, anhydride -CO-O-CO-R₁, nitrile -CN, iminoester -CNH-OR₂, amidine -CNH-NH₂, amidine substituée -CNH-NR₁R₂, dérivés imino de l'anhydride -CNH-O-CO-R₁, -CNH-O-CNH-R₁ et -CNH-NH-CNH-R₁,
R₁ = groupements alkyle, alcényle, alcynyle et/ou aryle et/ou groupements alkyle, alcényle, alcynyle et/ou aryle substitués avec jusqu'à 20 atomes de carbone ou l'hydrogène H,
R₂ = groupements alkyle, alcényle, alcynyle et/ou aryle et/ou groupements alkyle, alcényle, alcynyle et/ou aryle substitués avec jusqu'à 20 atomes de carbone,
R₃ = -OR₁, -NH₂, -NR₁R₂, -R₁N-CO-R₁ (groupement amide), -R₁N-CNH-R₁ (groupement amidine), -R₁N-CN (groupement cyanamide), -R₁N-CNH-NH-CN (groupement dicyandiamide) et -R₁N-CNH-NR₁R₁ (groupement guanidine).

3. Produit de condensation d'aminotriazine selon au moins l'une des revendications précédentes **caractérisé en ce qu'**au moins un dérivé d'acide oxocarboxylique est un ester d'acide oxocarboxylique (III) et/ou un hémicétal d'ester d'acide carboxylique (IV) 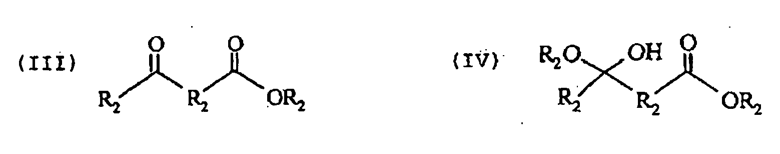 où les R₂ peuvent être identiques ou différents.

4. Produit de condensation d'aminotriazine selon au moins l'une des revendications précédentes **caractérisé en ce qu'**au moins un dérivé d'acide oxocarboxylique est un ester d'acide aldéhydecarboxylique (V) et/ou un hémiacétal d'ester d'acide carboxylique (VI) 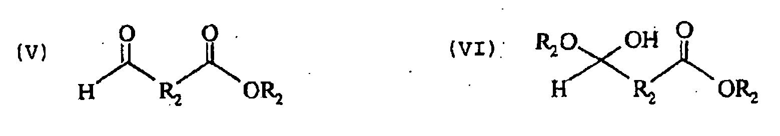 où les R₂ peuvent être identiques ou différents.

5. Produit de condensation d'aminotriazine selon au moins l'une des revendications précédentes **caractérisé en ce qu'**au moins un dérivé d'acide oxocarboxylique est un ester d'acide glyoxylique (VII) et/ou un hémiacétal d'ester d'acide glyoxylique (VIII) 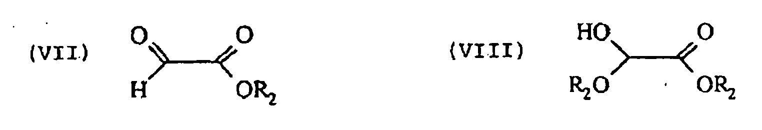 où les R₂ peuvent être identiques ou différents.

6. Produit de condensation d'aminotriazine selon au moins l'une des revendications précédentes **caractérisé en ce qu'**au moins un dérivé d'acide oxocarboxylique est le méthylhémiacétal de glyoxylate de méthyle (GMHA ; 2-hydroxy-2-méthoxy-acétate de méthyle) (IX).

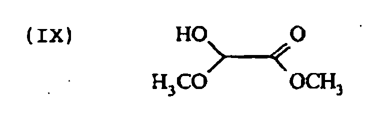

7. Produit de condensation d'aminotriazine selon au moins l'une des revendications précédentes **caractérisé en ce que** le rapport molaire de l'aminotriazine au dérivé d'acide oxocarboxylique est 1 : 2 à 1 : 4.

8. Produit de condensation d'aminotriazine selon au moins l'une des revendications précédentes **caractérisé en ce que** la réaction a lieu dans un solvant, en particulier l'eau, un alcool ou un solvant inerte.

9. Produit de condensation d'aminotriazine selon au moins l'une des revendications précédentes **caractérisé en ce que** la réaction a lieu à pH = 3 à 10.

10. Produit de condensation d'aminotriazine selon au moins l'une des revendications précédentes **caractérisé en ce que** le produit de condensation est soluble aussi bien dans les solvants organiques que dans l'eau.

11. Produit de condensation d'aminotriazine selon au moins l'une des revendications précédentes **caractérisé en ce qu'**il est formé par des réactions secondaires qui se déroulent en même temps que et/ou à la suite de la réaction primaire.

12. Produit de condensation d'aminotriazine selon la revendication 11 **caractérisé en ce que** la réaction secondaire est une éthérification, une transéthérification, une estérification, une transestérification, une amidation ou une hydrolyse.

13. Produit de condensation d'aminotriazine selon la revendication 11 **caractérisé en ce que** la réaction secondaire est conduite à la suite de la réaction primaire.

14. Produit de condensation d'aminotriazine selon l'une des revendications précédentes **caractérisé en ce que** des solutions de type sirop ayant une teneur de 5 à 95 % en masse, de préférence de 25 à 75 % en masse, de manière particulièrement préférée de 30 à 60 % en masse sont obtenues après la réaction.

15. Utilisation de produits de condensation d'aminotriazine, en particulier de produits de condensation de mélamine selon au moins l'une des revendications précédentes **caractérisée par** la production de résines, d'additifs pour résines, de stabilisants de bains de résines, de durcisseurs (latents), de systèmes de résines hybrides, d'adhésifs, de mousses, de fibres, de microcapsules, de corps mis en forme, de stratifiés, de réticulants, d'additifs pour peintures, de matériaux pour chromatographie, de constituants de synthèse organiques, de modificateurs de polymères, de produits agrochimiques, de produits de protection contre les UV et de soins pour la peau, de polyuréthanes ainsi que de matériaux ayant des propriétés ignifugeantes.

16. Procédé de production de produits de condensation d'aminotriazine selon au moins l'une des revendications 1 à 14 **caractérisé en ce qu'**une aminotriazine, en particulier la mélamine, est mise à réagir en phase liquide avec au moins un dérivé d'acide oxocarboxylique.

17. Procédé selon la revendication 16 **caractérisé en ce qu'**une dérivatisation, en particulier une éthérification, une transéthérification, une estérification, une transestérification, une amidation ou une hydrolyse est conduite après la réaction primaire.

18. Procédé selon la revendication 16 ou 17 **caractérisé en ce que** le produit réactionnel est concentré, filtré, séché, condensé encore par augmentation de la température et/ou durci.
